# EUROPEAN PATENT SPECIFICATION

(11) **EP 0 953 167 B1**
(45) Date of publication and mention of the grant of the patent: **02.05.2002**
(21) Application number: 98901966.6
(22) Date of filing: 13.01.1998
(51) Int. Cl.: G05B 19/042

(54) **CONTROL SYSTEM FOR A HOUSEHOLD APPLIANCE**
STEUERUNGSSYSTEM FÜR HAUSHALTSGERÄT
DISPOSITIF SERVANT A COMMANDER UN APPAREIL ELECTROMENAGER

(30) Priority: 13.01.1997 IT TO970017
(43) Date of publication of application: 03.11.1999
(73) Proprietor: WRAP S.p.A., 60044 Fabriano (AN) (IT)
(72) Inventor: AISA, Valerio, I-60044 Fabriano (IT)
(74) Representative: Dini, Roberto, Dr. Ing.
(86) International application number: EP9800162
(87) International publication number: WO9830941

(56) References cited:
- EP-A- 0 298 625
- EP-A- 0 482 578
- DE-A- 4 039 465
- GB-A- 2 251 960
- US-A- 4 636 949
- US-A- 5 299 113
- US-A- 5 375 508

## Description

The present invention relates to a control system for a household appliance, of the type comprising an electronic control unit and control means for the selection of predetermined basic functions of said appliance.

As known, the main resources offered by the use of electronic technologies for the control of household appliances tend to favour the development of products with an increasing number of functions, but at the same time with an ever increasing managing complexity.

For instance, the possibility of implementing several cooking procedures in one same oven gives the user a large number of possible optimal cookings; let us think, in fact, of the ovens providing for several procedures of use, such as static, ventilated, microwaves, steam, infrared cooking conditions, etc., and possible combinations of such techniques.

Therefore, if on one hand the usage opportunities of the oven are increasing, on the other hand it is apparent that to fully exploit such resources, complex sequences of times, temperatures and baking process combinations (conventional, steam, microwaves) have to be entered by the user from a keyboard.

Similar problems arise when other household appliances are used instead of a baking apparatus, such as laundry washing-machines, dishwashers, refrigerators, and it is desired to exploit at the most the resources they can offer.

An attempt to simplify the usage procedures of complex household appliances requires in fact the use of proper dialogue means, such as displays and keyboards, which may make things easier for the user through a most possible interactive programming.

However, these dialogue means, being expensive on their own, also require implementation of a complex electronics capable to withstand difficult operating conditions, thus leading to a further cost increase.

Other known solutions provide for the assembly of sophisticated automatic programming systems, based on bar-code or magnetic card readers onboard the household apparatus, which are user-friendly, but cause the final cost of household apparatus to become forbiddingly high. For this reason, multifunction household appliances usually have a really high cost, which limits their distribution and reduces their "user friendly" feature.

Document US-5-375-508 discloses relevant prior art.

The present invention has the aim of providing a solution to the above problems, without increasing the cost of the household apparatus to a forbiddingly high level.

Said object is reached according to the present invention, as defined in independent claims 1 and 17.

Further objects, characteristics and advantages of the present invention will be apparent from the following detailed description and the annexed drawings, which are only supplied by way of a non limiting example, wherein:
- Fig. 1 shows schematically a household appliance according to a first embodiment of the present invention;
- Fig. 2 shows schematically a household appliance according to a second embodiment of the present invention;
- Fig. 3 shows schematically a household appliance according to a third embodiment of the present invention;
- Fig. 4 shows schematically a household appliance according to a fourth embodiment of the present invention.

The basic idea of the present invention is to realize a household appliance which, under usual operating conditions, is equipped with functions of conventional type, i.e. having common standard programs, however with the peculiar feature of being already preset or prearranged for the execution of additional or sophisticated functions, performances or operating programs. According to the invention, said additional functions, performances or programs are obtained through a data input to the household apparatus (for example by physical connection or through an infrared or radio-frequency system) from an electronic device being external and capable of supplying the control system of the apparatus with the necessary information for the purpose.

According to the invention, the control system of the household apparatus is at least partially electronic and comprises a microcontroller, duly programmed and having memory means, within which information for the execution of the various functions of the household appliance are codified (the fact that the control system of the household appliance is of the electronic type, should not be considered as a limit to the invention, since such a characteristic is framed under the current natural evolution of control systems for household appliances, subject to an increasingly change from electromechanical to electronic technology).

Such a control system can obviously be interfaced with the above mentioned external electronic device, whose purpose is to ensure an easier management of the complex usage procedures of the apparatus for the user. Therefore, the control system of the household appliance according to the invention has to be associated with a proper interfacing module, being cost-effective and simple to realize, which forms an optional accessory for the apparatus itself.

The control panel of the household apparatus according to the invention has anyway a conventional appearance, and therefore comprises classic knobs, push-buttons, pilot lights, and so on, to let the user have access in a simple known manner to the basic standard functions and programs of the apparatus.

As regards programming of the control system of the household appliance according to the invention, a first condition consists in splitting its possible functions (or programs) in basic or standard functions (or programs) and additional functions (or programs).

Basic functions are the ones conventionally performed by a conventional middle-class household appliance.

In the instance of a baking oven, reference can be made for example to conventional infrared cooking, with the possibility of selecting the cooking program (among those being available, which typically range from 5 to 10), the relevant temperature and likely the cooking time, using the proper keys and knobs.

In the instance of a freezer, reference can be made for example to a push-button and a rapid freezing pilot lamp, a temperature setting knob and an alarm pilot light (dangerous temperature).

In the instance of a laundry washing-machine, reference can made for example to a typical program selector, a temperature setting knob, a spin speed selector and push-buttons for various options (prewash, no-spin, small load, etc.).

Similarly, in the instance of a dishwasher, reference can made for example to a program selector and some push-buttons for various options (small load, crockery wetting, etc.).

As stated, according to the invention, the above functions and setting means are provided in the basic version of the household appliance.

On the contrary, additional functions or programs according to the invention may be as follows.

With reference to a baking oven, said additional functions may be realized by the possibility of dynamically changing the heating elements configuration during the cooking process, so determining a large number of new programs being different from the basic ones, which allow to obtain proper temperature profiles associated with specific recipes; or the possibility for the special instance of ovens equipped with mixed cooking systems (for example infrared + microwaves), to best set the cooking contribution associated with each one of such systems and avoid the trouble for the user of planning determined operation sequences.

With reference to a freezer, an additional function may be for instance the opportunity of managing a file for the preserved food, with advice forecast to the user when a given food is approaching the expire date for its consumption.

With reference to a washing machine (either a laundry washer or dishwasher), additional functions may include for instance the possibility of performing washing during scheduled time periods of low-cost energy, or the possibility of performing the washing during the scheduled times of lower energy consumption, thus planning the daily energy consumption and avoiding possible blackouts due to an overflow of the value of the maximum installed power for the household environment where the apparatus is in use.

Thus, according to the invention, the control system of the apparatus, is prearranged or preset to allow the use of all its programs or functions, i.e. both the conventional or standard ones and the additional ones as provided according to the invention.

To this purpose, in a preferred embodiment of the invention, the instructions which allow the household apparatus to perform its conventional functions, through the controls normally provided in the appliance itself, are duly codified in the permanent memory means associated with the microcontroller of the control system. Moreover, within such permanent memory means, a software or data is codified which allows the control system to manage the parameters associated with the additional functions - duly controlled by an external device. Such parameters, being related to the additional functions, selected through the likely optional external device, can be stored from time to time, i.e. depending upon the selected additional function, within temporary memories (RAM or E² PROM) of the control system.

As it is clear, the basic version of the household appliance according to the invention is capable of performing the conventionally known functions associated to it, but its cost is not penalized if compared to a conventional middle-class household appliance.

In fact, the difference with respect to a known household appliance - which merely concerns the adopted control technology (electronic control in-lieu of electromechanical control) - does not involve as such an appreciable cost increase, as it is always dealing with a cheap electronics, being related to the functional aspect only (use of notoriously low-priced microprocessors) and is free from expensive interface means for the user (displays, keyboards, etc.); on the other hand, the additional software does not practically implies any additional cost, since its development cost is split over a large number of machines.

As stated, the electronic control system of the household appliance according to the invention, being based on a microcontroller, provides for the possibility of receiving from the outside, in a codified form, proper values or data concerning the operating parameters (temperature, timing, thermal gradient and active thermal-load configuration values, etc.), for exploiting all its additional potentialities, as indicated for instance in the previous examples of a baking oven, a freezer, and washing-machine.

Also this pre-arrangement does not entail any significant additional costs, as it can be obtained by the simple choice of a microprocessor which is capable of communicating outside. To this purpose, for instance, any microprocessor with a standard asynchronous serial line (EIA - RS232) and adequate memory area also allowing a software management of the additional functions or programs would be suitable. Microcontrollers of this kind can be easily found on the market, at low cost (typically not over 2 or 3 US Dollars).

Finally, as stated above, according to the invention, a proper module should be provided for interfacing the control system of the household appliance with the above external electronic device. Such an interfacing module consists of a proper adapter of a limited complexity and cost, which vary in function of the nature and complexity of the external electronic device. However, it should be highlighted that also this adapter is not necessary for the household appliance to perform its own basic functions in a regular manner.

An essential requirement for the external device, which sends the control information to the control system for improving and extending the functions of the apparatus, should be easiness of use and versatility, and possibly the programmability; an ideal electronic device for performing the above function is represented for instance by a Personal Computer.

In this case, the interfacing procedures to the household appliance, can be of two kinds, i.e. either direct interfacing or through a proper serial data bus.

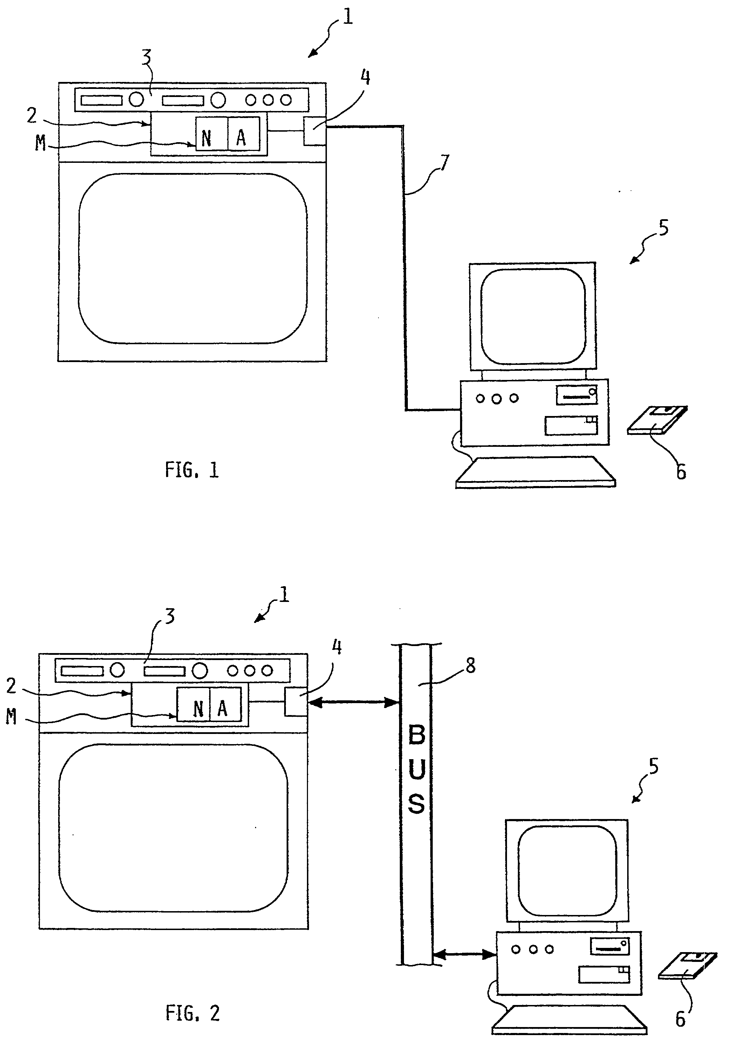

The case of direct interfacing is shown by way of example in Fig. 1, where a household apparatus according to the invention is indicated with 1, being represented in the specific case by baking oven. Such a household apparatus 1 is equipped with an electronic control system indicated with 2, of the type having a microcontroller and proper memory means, indicated with M, as previously described. In a proper area N of said memory means M, the data required for performance of the basic functions are stored, whereas in a special area A of the memory means M proper programs are stored to interpret and convert into actions the data coming from the external device.

A usual control panel of the household apparatus 1 is indicated with 3, for the selection and activation of its basic operating functions or programs.

The above interfacing module of the household appliance 1 is indicated with 4, consisting in the example of a proper serial port, connected in a known manner with the microcontroller of the control system 2.

The external device, i.e. a Personal Computer or PC, is indicated with 5, for which a proper software is provided on a suitable magnetic or optical support 6, for the control of the additional programs or functions of the oven 1. Finally, a serial or two-pole cable is indicated with 7, for the connection of the PC 5 with the interfacing module 4 and consequently with the control system 2.

As it can be seen, the direct interfacing between the household apparatus and the external electronic device represented in Fig. 1 by way of example is the simplest, as well as most cost-effective solution. In fact, it will be enough to connect the PC 5 to the household apparatus 1 having the proper communicating port 4, through cable 7. To avail himself of this opportunity, the user should preferably have a portable PC for access to the household apparatus.

Interfacing through a serial data bus is represented in Fig. 2, where the same reference numbers shown in the previous figure are used.

As it is obvious, this interfacing system is by far the most suitable from a practical viewpoint, when using a PC, even if it requires the availability of a proper home bus, as indicated with number 8 in the figure, in itself known.

Such a bus 8 can be used to exchange information between a master device (in this instance the PC 5) and the various household devices (among which the household apparatus 1 according to the invention), and may use different transmission means, such as carrier data transmission system, phone cable, coaxial cable, radio-frequency, infrared rays, etc.

The theme related to the home bus is framed under the wider home automation thematic presently subject to keen attention, above all for the resources offered in terms of energetic consumption rationalization. In view of various solutions now available to obtain home automation with relevant data buses and communication protocols, it ensues that also the present invention can be concretized in a simple way.

In a most simple practical case, the data bus 8 can be of the carrier data transmission type (or power line carrier) also known as such, i.e. of the type where the exchange of information between the PC and the various household apparatus is obtained exploiting the house electric network.

As stated, the PC allowing to realize the expansion of the functions of the household apparatus according to the invention will be combined with a management program, supplied on a suitable magnetic or optical support (floppy disk or CD), as indicated with 6 in Figs. 1 and 2.

Several utilities or utility programs can also be advantageously made available on such a program support 6 for the use of the household appliance.

For a refrigerator, it can be thought of a database for the preserved food, with advice forecast to the user when a given food is approaching its expire date.

For a baking oven, it can be thought of the data related to pre-established baking recipes and the possibility of permanent storage of the users' personal recipes. Specifically, for a baking oven, such a PC program could have the following basic features:
- display, and likely amendment, on the PC display screen of the baking process parameters related to the various recipes;
- management of new recipes, designed by the user with the aid of the same program, which is advantageously designed to guide the user interactively in writing them down and codifying them adequately;
- management of a complete cook-book on a diskette, as a typical easy-to-use database; in this case, the cook-book could be delivered on a magnetic support (floppy) or optical support (compact disk);
- simple adjustment of the recipes (i.e. quantities of ingredients, baking times, temperatures, etc.) as a function of the number of people to be served; in fact, considering that a basic recipe is usually foreseen for a fixed number of people, the cited program can be provided, upon the user's request, for modifying and storing the reference parameters being necessary, so that the baking result is adjusted for a different number of persons;
- planning of weekly menus related to the various recipes, with the advantage of having automatically a weekly and/or monthly purchase list.

It is obvious, anyway, that many other functions can be performed by said additional software program, according to the development degree assigned to it; for instance, a function can be provided to indicate what recipes stored on a disk can be obtained with some limited ingredients indicated by the user (let us think of an instance where at weekend or late in the day, a user was unable to do any shopping and only a few ingredients are available).

At any rate, apart from the above utilities, the availability of a Personal Computer for managing the additional complex functions of a household appliance will greatly facilitate the planning activity for the user. To this purpose, the program for obtaining the control of the household appliance through a PC shall be designed to be "user friendly", i.e. easy to be managed by the user and allowing easy programming of the additional functions of the apparatus, for instance through the use of menus for guided consultation and programming. Such a program will also favorably provide control routines to prevent the user from making a wrong or improper programming, that may lead to unsatisfactory results or performance.

A possible alternative to the PC may be for instance a remote control, through which the control system of the household appliance can receive the controls to carry out the complex functions not included in the standard ones. In this case there is obviously the advantage of an easier handling for the user.

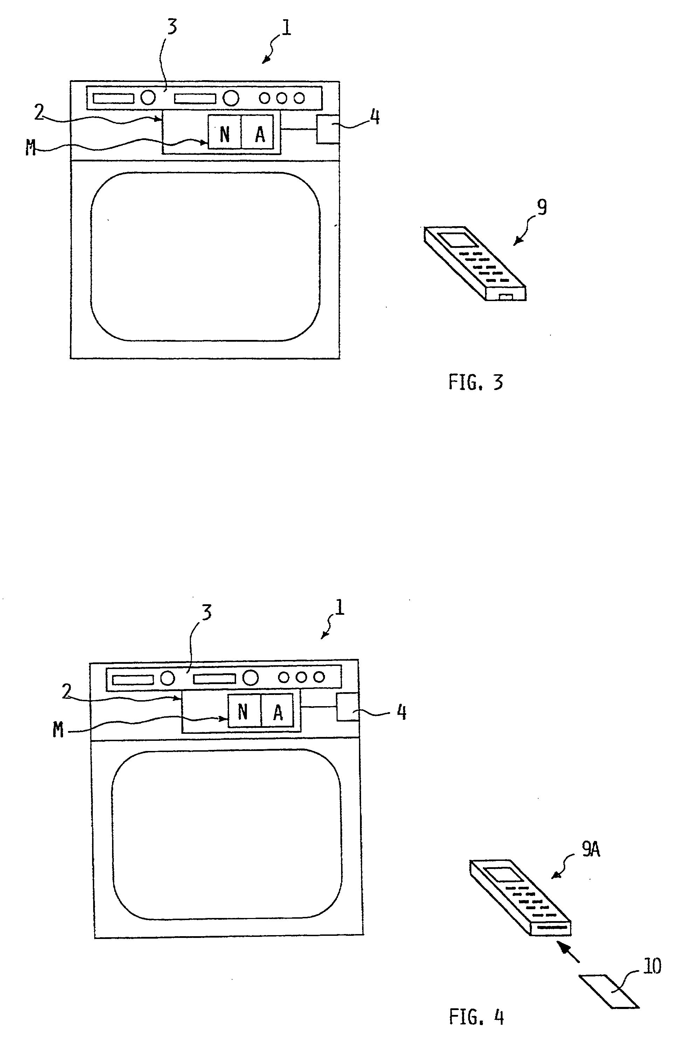

An example of embodiment, using an infrared remote control instead of a PC as external electronic device, is illustrated in Fig. 3.

In this case, the interfacing module indicated with 4A and connected with the control unit of the household appliance, consists of an infrared signal receiver, with a relevant decoding software already available in the permanent memory M of the control system 2 of the apparatus.

In Fig. 3, the household appliance according to the invention consists of an oven 1 (for example a combined baking oven, i.e. conventional type plus microwaves or conventional type plus steam, etc.); such an oven 1 is fitted with the above microprocessor based control system 2, having the same features as previously described.

As stated, the control system 2 is provided to manage the conventional control means, which allow the user to use the oven 1 also apart from the remote control 9. Such conventional control means comprise usual push-buttons, keyboards, displays, etc., which are known as such and available on the control panel 3 of the oven 1.

In the case of Fig. 3, the control system 2 has a proper additional software, being stored in the area A of a permanent memory M (for instance of the ROM type), capable of adequately interpreting the controls from a remote control 9, so that the control system itself may enable performance of the additional programs already codified in the memory means M. In the case of the system described with reference to Fig. 3, it is preferable in fact that also the information required to perform the additional functions of the household appliance should be contained in the permanent memory means of the control system, since the limited memory means of a conventional remote control do not allow storage of a considerable volume of information.

At any rate, such limit can be overcome with the use of likely additional memories, for instance in the form of magnetic cards or solid state electronic memories (e.g. as those used on cellular telephones).

In Fig. 4 a remote control indicated with 9A is represented, which has a reader of additional memories 10, for instance magnetic type cards, onto which several recipes are stored.

Under this frame, it can also be thought of the use of a single remote control being capable of controlling the additional functions of a number of different household appliances according to the invention, to which relevant cards 10 will be associated, or for the case in which various operating programs for one same household appliance (e.g. associated with various cooking recipes, in the instance of a baking oven) may be contained on several cards 10.

Anyway, irrespective of the approach being chosen, if a remote control is used to activate a given cooking program available in the memory of the remote control 2, it will be enough to digit for instance a numerical code associated with the relevant apparatus program and press a confirmation key to enable transmission of the codified control data from such a program to the infrared receiver 4A of the oven, and from here to the control system 2. As an alternative, the remote control could foresee some dedicated keys calling for specific additional functions or programs.

The characteristics of the present invention and its advantages are clear from the above description.

The substantial advantage of the invention, which also represents its most significant element, concerns the user and refers to a simplification of the usage procedures for the household apparatus, since the additional functions or programs tending for their own nature to increase the managing complexity for the user, are simplified by the use of said external electronic device (for example a Personal Computer or other dedicated device, such as a remote control).

A second advantage for the user is the possibility for the latter to initially purchase a basic version of the household apparatus, and then add the additional functions, by buying the relevant "control means".

Moreover, should the user already have an electronic device capable of managing the information associated with the additional functions of said household appliances (e.g. a Personal Computer), the cost required to convert a basic version of the appliances into an improved one will be minimized, since it only involves the interface module between them and the external electronic device.

A further advantage of the invention is of a commercial nature, and relates to the possibility of handling with household appliances appearing more attractive in their basic version, due to their "expandable" functions, and therefore more competitive compared to the known household appliances having equal performances (since the presetting for the expansion of functions does not entail additional costs) and which, in the expanded version, acquire supplementary functions, so assuming a strongly competitive position as high-class level appliances on the market.

It is obvious that many changes are possible for the man skilled in the art to the household apparatus described by way of example, without departing from the invention.

For instance, in a preferred embodiment of the invention, the external electronic device can be used for updating the clock of the household appliance.

In the instance of an oven, due to obvious reasons of thermal stress, it is not advisable according to the prior art to equip the appliance with a battery clock, to protect it against electric blackouts, due to temperature and need of battery maintenance.

For this reason, following a mains blackout, in the daily practice, the oven clock display will systematically flash waiting for reset by the user.

According to the invention, such an inconvenience can be solved in a very simple manner with an external electronic device provided with its own battery (usual features of PC's or remote controls) and also with a clock. This means that, in order to reset the oven clock it, will be enough to enter a simple instruction in the PC or press a proper push-button on the remote control.

According to a further variant embodiment of the invention, the control system 2 can also be associated with a data transmission system for transmitting proper information concerning the appliance operation status to the PC 5 or remote control 9 or 9A (that will be equipped with a proper receiver and display), e.g. the parameters identifying the progress status of a performed program; for instance, always in the case of cooking, such data could refer to the current temperature, active function, time elapsed since baking start, estimation of the time still required to cooking end, estimation of the food cooking level, likely advice for the user if a manual operation is required, diagnostic messages for technical service, and so on.

Finally, a dedicated remote control may also be provided, specifically for technical assistance, allowing the technical assistant to control specific diagnostic functions of the household appliance, duly codified in the memory means of the control system, e.g. to check operation of the internal devices of the household appliance.

However, it is obvious that many other changes are possible for the man skilled in the art to the electronic controlled household apparatus described by way of example without departing from the invention.

## Claims

1. Control system for an appliance (1) which processes household items such as food, laundry, crockery and the like, said appliance (1) comprising an electronic control unit (2) and selection means (3), located in particular on a control panel of the appliance cabinet, for the selection of predetermined basic functions of said appliance (1), whereby, as part of said control system, a first set of information is stored in said electronic control unit (2) and used by said electronic control unit (2), in dependence upon selections made through said selection means (3), for controlling the performance of said basic functions, **characterized in that**, as a further part of said control system, a second set of information is stored in said electronic control unit (2), for enabling said apparatus (1) to perform additional functions to said basic functions, said electronic control unit (2) being prearranged for interfacing with an external electronic device (5; 9; 9A) which enables the selection and the performance of said additional functions.

2. Control system, according to claim 1, **characterized in that** said electronic unit (2) comprises memory means (M), where in a first area (N) of said memory means (M) said first set of information is stored and where in a second area (A) of said memory means (M) said second set of information is stored, which is used by the control system to interpret and/or convert into actions data from said external electronic device (5; 9; 9A).

3. Control system, according to claim 1, **characterized in that** interfacing means (4; 4A) are provided for allowing the connection between said electronic unit (2) and said external electronic device (5; 9; 9A).

4. Control system, according to claim 3, **characterized in that** said interfacing means comprise an interfacing module (4; 4A), to be associated with said electronic unit (2).

5. Control system, according to at least one of the previous claims, **characterized in that** said electronic unit (2) comprises a microcontroller having a communication line to external devices.

6. Control system, according to at least one of the previous claims, **characterized in that** said electronic unit (2) is provided to transmit information relating to the operating status of the household appliance (1).

7. Control system, according to the previous claim, **characterized in that** said external device (5; 9; 9A) is provided for receiving said information relating to the operating status of the household appliance (1).

8. Control system, according to at least one of the previous claims, **characterized in that** said external device (5; 9; 9A) comprises a display device.

9. Control system, according to claims 7 and 8, **characterized in that** said external device is provided for displaying on said display device said information relating to the operating status of the household appliance (1).

10. Control system, according to at least one of the previous claims, **characterized in that** said household appliance (1) comprises a clock, that said external device (5; 9; 9A) comprises a battery and a relevant clock, and that said external device (5; 9; 9A) is provided for updating the clock of the household appliance (1).

11. Control system, according to at least one of the previous claims, **characterized in that** said external device (5; 9; 9A) is a Personal Computer (5).

12. Control system, according to the previous claim, **characterized in that** said Personal Computer (5) is connected with said household appliance (19) through a data bus, in particular a power line carrier system.

13. Control system, according to at least one of claims 1 to 9, **characterized in that** said external device (5; 9; 9A) is a remote control (9; 9A), in particular of the infrared or radio-frequency type, and that said interfacing means comprise a signal receiver (4A) from said remote control.

14. Control system, according to at least one of the previous claims, **characterized in that** a management program is provided, supplied on a suitable support (6), for said external device (5; 9; 9A), for an easy setting of said additional functions through said optional device (5; 9; 9A).

15. Control system, according to the previous claim, **characterized in that** said management program provides control routines for avoiding the wrong or improper programming of the household appliance (1).

16. Control system, according to the previous claim, **characterized in that** said management program comprises utilities functions for the use of the household appliance (1), such as a cook-book for the use of an oven or a database for the food preserved in a refrigerator.

17. Method for programming an electronically controlled appliance (1) for processing household items such as food, laundry, crockery and the like, said appliance (1) being able to perform basic functions and additional functions, whereby, according to said method, said basic functions are selected by selection means (3) comprised in said household appliance (1), and whereby a first set of information is stored in an electronic control unit (2) and used by said electronic control unit (2), in dependence upon selections made through selection means (3), for controlling the performance of said basic functions, and whereby a second set of information is stored in said electronic control unit (2), for enabling said apparatus to perform said additional functions, and whereby the selection of the said additional functions is enabled by the use of an external electronic device (5; 9; 9A) interfaced with said electronic control unit (2), the selection of said additional functions being possible only through the use of said external electronic device (5; 9; 9A).

## Patentansprüche

1. Steuersystem für ein Gerät (1), das Haushaltsgegenstände wie Nahrungsmittel, Wäsche, Geschirr und dergleichen behandelt, wobei das Gerät (1) enthält:
eine elektronische Steuereinheit (2) und Auswählmittel (3) zum Auswählen vorbestimmter Basisfunktionen des Gerätes (1), wobei die Auswählmittel insbesondere auf einer Steuertafel des Gerätegehäuses angeordnet sind, wobei eine erster Satz an Informationen in der elektronischen Steuereinheit (2) als ein Teil des Steuersystems gespeichert ist und durch die elektronische Steuereinheit (2) in Abhängigkeit von der mit den Auswählmitteln (3) getroffenen Auswahl verwendet wird, um die Ausführung der Basisfunktionen zu steuern,
**dadurch gekennzeichnet, dass** ein zweiter Satz an Informationen in der elektronischen Steuereinheit (2) als weiterer Teil des Steuersystems gespeichert ist, um dem Gerät (1) zu ermöglichen, zu den Basisfunktionen zusätzliche Funktionen auszuführen, wobei die elektronische Steuereinheit (2) zum Zusammenwirkung mit einer externen elektronischen Einrichtung (5; 9; 9A), welche die Auswahl und die Ausführung der zusätzlichen Funktionen ermöglicht, vorausgerüstet ist.

2. Steuersystem nach Anspruch 1,
**dadurch gekennzeichnet, dass** die elektronische Einheit (2) Speichermittel (M) aufweist, wobei in einem ersten Bereich (N) der Speichermittel (M) der erste Satz an Informationen gespeichert ist und wobei in einem zweiten Bereich (A) der Speichermittel (M) der zweite Satz an Informationen gespeichert ist, welcher durch das Steuersystem verwendet wird, um Daten von der externen elektronischen Einrichtung (5; 9; 9A) zu interpretieren und/oder in Aktionen umzusetzen.

3. Steuersystem nach Anspruch 1,
**dadurch gekennzeichnet, dass** Schnittstellenmittel (4; 4A) vorgesehen sind, um die Verbindung zwischen der elektronischen Einheit (2) und der externen elektronischen Einrichtung (5; 9; 9A) zu ermöglichen.

4. Steuersystem nach Anspruch 3,
**dadurch gekennzeichnet, dass** die Schnittstellenmittel ein Schnittstellenmodul (4; 4A), welches mit der elektronischen Einheit (2) zusammenwirken soll, enthalten.

5. Steuersystem nach zumindest einem der vorstehenden Ansprüche,
**dadurch gekennzeichnet, dass** die elektronische Einheit (2) einen Microcontroller mit einer Kommunikationsleitung zu externen Einrichtungen aufweist.

6. Steuersystem nach zumindest einem der vorstehenden Ansprüche,
**dadurch gekennzeichnet, dass** die elektronische Einheit (2) vorgesehen ist, um Informationen betreffend den Betriebsstatus des Haushaltsgerätes (1) zu übertragen.

7. Steuersystem nach dem vorstehenden Anspruch,
**dadurch gekennzeichnet, dass** die externe Einrichtung (5; 9; 9A) zum Empfang der Informationen betreffend den Betriebsstatus des Haushaltsgerätes (1) vorgesehen ist.

8. Steuersystem nach zumindest einem der vorstehenden Ansprüche,
**dadurch gekennzeichnet, dass** die externe Einrichtung (5; 9; 9A) eine Anzeigeeinrichtung enthält.

9. Steuersystem nach Anspruch 7 und 8,
**dadurch gekennzeichnet, dass** die externe Einrichtung vorgesehen ist, um auf der Anzeigeeinrichtung die Informationen betreffend den Betriebsstatus des Haushaltsgerätes (1) anzuzeigen.

10. Steuersystem nach zumindest einem der vorstehenden Ansprüche,
**dadurch gekennzeichnet, dass** das Haushaltsgerät (1) eine Uhr enthält, dass die externe Einrichtung (5; 9; 9A) eine Batterie und eine zweckdienliche Uhr aufweist und dass die externe Einrichtung (5; 9; 9A) vorgesehen ist, die Uhr des Haushaltgerätes (1) auf die aktuelle Zeit einzustellen.

11. Steuersystem nach zumindest einem der vorstehenden Ansprüche,
**dadurch gekennzeichnet, dass** die externe Einrichtung (5; 9; 9A) ein Personal Computer (5) ist.

12. Steuersystem nach dem vorstehenden Anspruch,
**dadurch gekennzeichnet, dass** der Personal Computer (5) über einen Datenbus, insbesondere ein Versorgungsnetz-Trägersystem mit dem Haushaltsgerät (19) verbunden ist.

13. Steuersystem nach zumindest einem der Ansprüche 1 bis 9,
**dadurch gekennzeichnet, dass** die externe Einrichtung (5; 9; 9A) eine Femsteuerung (9; 9A), insbesondere eine Infrarot- oder HF-Fernsteuerung ist, und dass die Schnittstellenmittel einen Empfänger (4A) für Signale aus der Fernsteuerung enthalten.

14. Steuersystem nach zumindest einem der vorstehenden Ansprüche,
**dadurch gekennzeichnet, dass** für die externe Einrichtung (5; 9; 9A) ein Verwaltungsprogramm vorgesehen ist, das auf einem geeigneten Träger (6) bereitsteht wird, um die zusätzlichen Funktionen durch die optionale Einrichtung (5; 9; 9A) leicht einstellen zu können.

15. Steuersystem nach dem vorstehenden Anspruch,
**dadurch gekennzeichnet, dass** das Verwaltungsprogramm Steuerroutinen zum Vermeiden eine falschen oder ungeeigneten Programmierung des Haushaltsgerätes (1) bereitstellt.

16. Steuersystem nach dem vorstehenden Anspruch,
**dadurch gekennzeichnet, dass** das Verwaltungsprogramm Dienstfunktionen für den Gebrauch des Haushaltsgerätes (1), wie ein Kochbuch für den Einsatz bei einem Ofen oder eine Datenbank für die Nahrungsmittel, die in einem Kühlschrank aufgenommen sind, enthält.

17. Verfahren zum Programmieren eines elektronisch gesteuerten Gerätes (1) zum Behandeln von Haushaltsgegenständen, wie Nahrungsmitteln, Wäsche, Geschirr und dergleichen, wobei das Gerät (1) in der Lage ist, Basisfunktionen und zusätzliche Funktionen auszuführen, wobei gemäß dem Verfahren die Basisfunktionen durch Auswählmittel (3), die in dem Haushaltsgerät (1) vorgesehen sind, ausgewählt werden, und wobei ein erster Satz an Informationen in einer elektronischen Steuereinheit (2) gespeichert ist und durch die elektronische Steuereinheit (2) in Abhängigkeit von der durch die Auswählmittel (3) vorgenommenen Auswahl zum Steuern der Ausführung der Basisfunktionen verwendet wird und wobei ein zweiter Satz an Informationen in der elektronischen Steuereinheit (2) gespeichert ist, um dem Gerät zu ermöglichen, die zusätzlichen Funktionen auszuführen, und wobei die Auswahl der zusätzlichen Funktionen durch den Einsatz einer externen elektronischen Einrichtung (5; 9; 9A) ermöglicht wird, welche mit der elektronischen Steuereinheit (2) verbunden ist, wobei die Auswahl der zusätzlichen Funktionen nur durch den Einsatz der externen elektronischen Einrichtung (5; 9; 9A) möglich ist.

## Revendications

1. Système de commande pour appareil électroménager (1) qui traite des articles de ménage, comme la nourriture, le linge, la vaisselle, etc., ledit appareil électroménager (1) comprenant une unité de commande électronique (2) et un moyen de sélection (3), se trouvant plus particulièrement sur un panneau de commande du coffret de l'appareil électroménager, pour permettre la sélection de fonctions de base prédéterminées dudit appareil électroménager (1), de sorte que, au titre d'une partie dudit système de commande, un premier ensemble d'informations est stocké dans ladite unité de commande électronique (2) et est utilisé par ladite unité de commande électronique (2) en fonction de sélections faites par l'intermédiaire dudit moyen de sélection (3), pour commander le fonctionnement desdites fonctions de base, **caractérisé en ce que**, au titre d'une autre partie dudit système de commande, un deuxième ensemble d'informations est stocké dans ladite unité de commande électronique (2), afin de permettre audit appareil (1) d'effectuer des fonctions supplémentaires par rapport auxdites fonctions de base, ladite unité de commande électronique (2) étant préconçue pour être en interface avec un dispositif électronique externe (5; 9 ; 9A) qui permet la sélection et l'exécution desdites fonctions supplémentaires.

2. Système de commande selon la revendication 1, **caractérisé en ce que** ladite unité électronique (2) comprend un moyen de mémorisation (M), où, dans une première zone (N) dudit moyen de mémorisation (M), ledit premier ensemble d'informations est stocké et où, dans une deuxième zone (A) dudit moyen de mémorisation (M), ledit deuxième ensemble d'informations est stocké, lequel est utilisé par le système de commande pour interpréter et, ou bien, convertir en actions des données venant dudit dispositif électronique externe (5 ; 9 ; 9A).

3. Système de commande selon la revendication 1, **caractérisé en ce que** des moyens d'interface (4 ; 4A) sont prévus pour permettre la connexion entre ladite unité électronique (2) et ledit dispositif électronique externe (5 ; 9 ; 9A).

4. Système de commande selon la revendication 3, **caractérisé en ce que** lesdits moyens d'interface comprennent un module d'interface (4 ; 4A), devant être associé avec ladite unité électronique (2).

5. Système de commande selon l'une quelconque des revendications précédentes, **caractérisé en ce que** ladite unité électronique (2) comprend un microrégisseur possédant une ligne de communication avec des dispositifs externes.

6. Système de commande selon l'une quelconque des revendications précédentes, **caractérisé en ce que** ladite unité électronique (2) est destinée à transmettre des informations concernant l'état de fonctionnement de l'appareil électroménager (1).

7. Système de commande selon la revendication précédente, **caractérisé en ce que** ledit dispositif externe (5 ; 9 ; 9A) est conçu pour pouvoir recevoir lesdites informations relatives à l'état de fonctionnement de l'appareil électroménager (1).

8. Système de commande selon l'une quelconque des revendications précédentes, **caractérisé en ce que** ledit dispositif externe (5 ; 9 ; 9A) comprend un dispositif d'affichage.

9. Système de commande selon les revendications 7 et 8, **caractérisé en ce que** ledit dispositif externe est conçu pour pouvoir afficher, sur ledit dispositif d'affichage, lesdites informations se rapportant à l'état de fonctionnement de l'appareil électroménager (1).

10. Système de commande selon l'une quelconque des revendications précédentes, **caractérisé en ce que** ledit appareil électroménager (1) comprend une horloge, **en ce que** ledit dispositif externe (5 ; 9 ; 9A) comprend une batterie et une horloge associée, et **en ce que** ledit dispositif externe (5 ; 9 ; 9A) est conçu de façon à pouvoir mettre à jour l'horloge de l'appareil électroménager (1).

11. Système de commande selon l'une quelconque des revendications précédentes, **caractérisé en ce que** ledit dispositif externe (5 ; 9 ; 9A) est un ordinateur personnel (5).

12. Système de commande selon la revendication précédente, **caractérisé en ce que** ledit ordinateur personnel (5) est connecté audit appareil électroménager (19) par l'intermédiaire d'un bus de données, en particulier un système de porteuse par ligne de transport de courant électrique.

13. Système de commande selon l'une quelconque des revendications 1 à 9, **caractérisé en ce que** ledit dispositif externe (5 ; 9 ; 9A) est une télécommande (9 ; 9A), en particulier du type à infrarouges ou à radiofréquence, et **en ce que** lesdits moyen d'interface comprennent un récepteur (4A) de signal en provenance de ladite télécommande.

14. Système de commande selon l'une quelconque des revendications précédentes, **caractérisé en ce qu'**un programme de gestion est prévu, fourni sur un support approprié (6), à destination dudit dispositif externe (5 ; 9 ; 9A), afin de permettre un réglage aisé desdites fonctions supplémentaires via ledit dispositif optionnel (5 ; 9 ; 9A).

15. Système de commande selon la revendication précédente, **caractérisé en ce que** ledit programme de gestion produit des programmes de commande permettant d'éviter une programmation erronée ou incorrecte de l'appareil électroménager (1).

16. Système de commande selon la revendication précédente, **caractérisé en ce que** ledit programme de gestion comprend des fonctions utilitaires destinées à l'utilisation de l'appareil électroménager (1), comme par exemple un livre de cuisine destiné à être utilisé avec un four, ou bien une base de données relative à la nourriture conservée dans un réfrigérateur.

17. Procédé de programmation d'un appareil électroménager (1) électroniquement commandé, servant à traiter des articles de ménage, comme de la nourriture, du linge, de la vaisselle, etc., ledit appareil électroménager (1) étant en mesure d'effectuer des fonctions de base et des fonctions supplémentaires, de sorte que, selon ledit procédé, lesdites fonctions de base sont sélectionnées par un moyen de sélection (3) compris dans ledit appareil électroménager (1), et de sorte qu'un premier ensemble d'informations soit stocké dans une unité de commande électronique (2) et utilisé par ladite unité de commande électronique (2), en fonction de sélections faites par l'intermédiaire du moyen de sélection (3), afin de commander les performances desdites fonctions de base, et de sorte qu'un deuxième ensemble d'informations soit stocké dans ladite unité de commande électronique (2) afin de permettre audit appareil d'effectuer lesdites fonctions supplémentaires, si bien que la sélection de ces fonctions supplémentaires est validée par l'utilisation d'un dispositif électronique externe (5 ; 9 ; 9A) en interface avec ladite unité de commande électronique (2), la sélection desdites fonctions supplémentaires n'étant possible que par l'utilisation dudit dispositif électronique externe (5 ; 9 ; 9A).
